# EUROPÄISCHE PATENTSCHRIFT

(11) **EP 3 594 634 B1**
(45) Veröffentlichungstag und Bekanntmachung des Hinweises auf die Patenterteilung: **05.05.2021**
(21) Anmeldenummer: 19168654.2
(22) Anmeldetag: 11.04.2019
(51) Int. Cl.: G01F 1/32

(54) **STRÖMUNGSMESSER**
FLOW METER
DÉBITMÈTRE

(30) Priorität: 10.07.2018 DE 102018116640
(43) Veröffentlichungstag der Anmeldung: 15.01.2020
(73) Patentinhaber: SIKA Dr.Siebert & Kühn GmbH & Co. KG., 34260 Kaufungen (DE)
(72) Erfinder: Ketelsen, Jörn Ove, 37139 Adelebsen (DE); Bleichert, Bastian, 34260 Kaufungen (DE); Schmidt, Sergius, 34128 Kassel (DE)
(74) Vertreter: Patentanwälte Walther Hinz Bayer PartGmbB

(56) Entgegenhaltungen:
- WO-A1-2008/061551
- DE-A1- 2 635 801
- DE-A1- 2 802 009

## Beschreibung

Die Erfindung betrifft einen Strömungsmesser zur Messung der Fließgeschwindigkeit eines Fluids, mit einem mit wenigstens einem Flanschende axial begrenzten Messrohr, das einen mit dem Fluid durchströmbaren Messraum bildet und mit wenigstens einem Störkörper zur Erzeugung von Störungen in der Strömung, wobei der Störkörper im Messraum angeordnet ist und wobei stromabwärts des Störkörpers weiterhin ein Detektor zur Erfassung der Störungen angeordnet ist.

### STAND DER TECHNIK

Aus der EP 1 967 827 A1 ist ein Strömungsmesser zur Messung der Fließgeschwindigkeit eines Fluids bekannt, mit einem Messrohr und mit einem in das Messrohr eingesetzten Einschubrohr, das einen mit dem Fluid durchströmbaren Messraum bildet und mit wenigstens einem Störkörper zur Erzeugung von Störungen in der Strömung, wobei der Störkörper im Einschubrohr angeordnet ist und wobei stromabwärts des Störkörpers weiterhin ein Detektor zur Erfassung der Störungen angeordnet ist. Ferner sind der Detektor und der Störkörper durch Öffnungen in dem Messrohr und Öffnungen in dem Einschubrohr eingeführt.

Dabei können die das Messrohr durchströmenden Fluide mit einem Druck von 80 bar und mehr beaufschlagt sein. Durch die Öffnungen ist die Struktur des Einschubrohrs und insbesondere des Messrohrs geschwächt. Es kann insbesondere bei Alterung des Materials zur Rissbildung und damit zum Austritt des Fluids kommen. Ein weiterer Nachteil besteht darin, dass das Messrohr durch das eingesetzte Einschubrohr einen verringerten Innendurchmesser aufweist, wodurch Druckverluste entstehen und sich der Strömungswiderstand erhöht.

Aus der nachveröffentlichten DE 10 2018 101 278 A1 ist ein Strömungsmesser zur Messung der Fließgeschwindigkeit eines Fluids bekannt, mit einem Messrohr, das einen mit dem Fluid durchströmbaren Messraum bildet und mit wenigstens einem Störkörper, der im Messraum angeordnet ist und wobei im Messraum stromabwärts des Störkörpers weiterhin ein Messkörper als Detektor angeordnet ist, der aufgrund einer Wirbelbildung am Störkörper auslenkbar ist und wobei ein Blendenelement vorgesehen ist, das stromaufwärts vor dem Messrohr angeordnet ist und wobei das Blendenelement einen mit dem Durchmesser des Messraumes korrespondierenden Durchgang aufweist, und wobei an dem Blendenelement wenigstens ein Vorsprung zur Wirbelverstärkung ausgebildet ist.

Ein Nachteil dieser Ausgestaltung besteht darin, dass an Stellen, an denen der Störkörper an dem Messrohr ausgebildet ist, die Struktur des Messrohrs ebenfalls geschwächt ist. Ein weiterer Nachteil ist darin zu sehen, dass das Messrohr an Öffnungen zur Aufnahme des Detektors geschwächt ist und sich eine Leckage durch die Öffnung bilden kann.

Einer anderer Strömungsmesser ist in Dokument DE 26 35 801 A1 offenbart.

### OFFENBARUNG DER ERFINDUNG

Aufgabe der Erfindung ist die Verbesserung eines Strömungsmessers zur Messung der Fließgeschwindigkeit eines Fluids, der geeignet ist, auch die Fließgeschwindigkeit von mit hohem Druck beaufschlagten Fluiden über eine lange Gebrauchsdauer sicher und zuverlässig zu ermöglichen.

Diese Aufgabe wird ausgehend von einem Strömungsmesser gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass ein in das Messrohr eingeführtes Einschubelement mit einem Grundabschnitt vorgesehen ist, wobei der Grundabschnitt im Flanschende angeordnet ist und wobei das Einschubelement sich an den Grundabschnitt anschließende Bügel aufweist, die in den Messraum hineinragen und wobei zwischen den Bügeln der Störkörper ausgebildet und in seiner Position im Messraum gehalten ist.

Kern der Erfindung ist es durch das Einschubelement mit einem Störkörper ein Messrohr bereit zu stellen, dass ohne Schwachstellen insbesondere auch unter hohen Drücken, hohen Temperaturen oder Temperaturschwankungen betrieben werden kann. Da das Messrohr und der Störkörper nicht einteilig ausgebildet sind, bleiben strukturelle Schwachstellen an Verbindungsstellen und deren Übergängen zwischen dem Messrohr und dem Störkörper aus. Durch die Nutzung des Einschubelements können verschiedene Größen, insbesondere verschiedene Bügellängen, genutzt und einfach ausgetauscht werden. Dadurch können für Fluide mit jeweils verschiedenen Eigenschaften, insbesondere verschiedener Viskosität, zur Messung der Fließgeschwindigkeit optimale Störungen im Fluidstrom erzeugt werden. Ein weiterer Vorteil ist darin zu sehen, dass Strömungsverluste gering gehalten werden können, da ein Einschubelement keinen oder nur wenig Bauraum im Messrohr einnimmt.

In einer vorteilhaften Ausgestaltung ist der Grundabschnitt des Einschubelementes als Ringkörper ausgebildet, der in einer in das Flanschende eingebrachten Ringnut angeordnet ist. Dadurch wird ein sicherer Sitz und eine vorbestimmte Ausrichtung und Positionierung des Einschubelements im Messraum ermöglicht. Durch das Einbringen des Ringkörpers in die Ringnut ist ein bündiger Übergang zwischen einer stirnseitigen Oberfläche des Flanschendes und einer stirnseitigen Oberfläche des Ringkörpers gebildet. Dieser bündige Übergang ist vorteilhaft, wenn die Rohrleitung mittels einer Anschlussverschraubung an einem Gewinde an dem Flanschende angeschraubt wird. Dadurch wird ein dichter Anschluss gebildet und das Einschubelement in einer vorgesehenen Position gehalten. Ferner ist ein Einschubelement mit Ringkörper besonderes einfach austauschbar, da es am Flanschende einfach erreichbar und greifbar ist.

Zur Verstärkung von Störungen in der Strömung, insbesondere der Turbulenz- oder Wirbelbildung, kann am Grundabschnitt des Einschubelementes stromaufwärts des Störkörpers wenigstens ein radial nach innen ragender Vorsprung ausgebildet sein. Besonders vorteilhaft hat sich dabei erwiesen, dass an sich diametral gegenüberliegenden Positionen des Grundabschnittes jeweils ein Vorsprung angeordnet ist. Dadurch wird eine Turbulenzverstärkung bewirkt, die auch bei niedrigen Strömungsgeschwindigkeiten des Fluids im Messrohr genutzt werden kann. Als Ursache für diesen Effekt kann angenommen werden, dass die Anordnung wenigstens eines Vorsprunges stromaufwärts des Störkörpers Turbulenzen am Vorsprung erzeugt, und die am Vorsprung erzeugten Turbulenzen lösen sich vom Vorsprung ab und können die am Störkörper erzeugten Wirbel einer sich ausbildenden Karmann'schen Wirbelstraße verstärken. Im Ergebnis ergibt sich eine stärkere Beaufschlagung des Detektors, insbesondere durch die periodisch sich am Störkörper ablösenden verstärkten Wirbel. Durch die Anordnung des Vorsprunges am Grundabschnitt wird ein zusätzliches, den Vorsprung haltendes Mittel überflüssig. Ferner wird eine aufwendige Positionierung des Vorsprungs überflüssig da, die Positionierung beim Einsetzen des Einschubelements erfolgt.

Vorteilhafterweise ist das Einschubelement ein Spritzgussbauteil aus einem Kunststoff oder ein Druckgussbauteil aus einem metallischen Werkstoff, insbesondere Messing. Erfindungsgemäß sind der Grundabschnitt, die Bügel und der Störkörper als ein einteiliges Bauteil ausgebildet. Durch die einteilige Ausgestaltung wird die Herstellung, eine Montage und Austausch des Einschubelements im Messrohr vereinfacht. Ferner wird durch die einteilige und damit fest vorgegebene Anordnung von Grundabschnitt, Bügel und Störkörper zueinander eine Fehlanordnung oder Abweichungen durch Toleranzen zwischen diesen Bauteilen vermieden. Abhängig von den Eigenschaften des Fluids, wie beispielsweise Viskosität, sowie Strömungsgeschwindigkeit können Einschubelemente mit verschieden dimensionierten Bauteilen, nämlich Bügel, Ringkörper, Störkörper und Vorsprung vorgehalten werden, die dann entsprechend den Eigenschaften in das Messrohr im Austausch zueinander eingesetzt werden.

In einer vorteilhaften Weiterbildung weist eine Innenwand des Messrohres wenigstens eine und/oder zwei gegenüberliegende Längsnuten auf, in denen die Bügel einliegen, wenn das Einschubelement in das Messrohr eingeführt ist. Dabei sind die Längsnuten komplementär zum Querschnitt der Bügel ausgebildet, sodass die Innenwand mit in die Längsnuten eingebrachten Bügeln unterbrechungsfrei ausgebildet ist. Durch die Längsnuten und Bügel wird ein Einschieben, sowie eine Positionierung und Ausrichtung des Einschubelementes im Messrohr erleichtert und eine Fehlpositionierung vermieden. Durch die unterbrechungsfreie Ausbildung der Innenwand wird eine störungsfreie Strömung des Fluids ermöglicht und somit ein Druckverlust vermieden.

In einer vorteilhaften Weiterbildung des Strömungsmessers ist der Grundabschnitt mit wenigstens einer Anformung ausgebildet und es ist vorgesehen, dass das Flanschende des Messrohrs mit einer zur Anformung komplementären Aussparung ausgebildet ist, sodass das Einschubelement um eine Längsachse des Messrohres rotatorisch ausgerichtet ist, wenn die Anformung in die Aussparung eingreift. Durch die Ausrichtung kann insbesondere sichergestellt werden, dass die Position vom Vorsprung und dem Störkörper relativ zu einem Detektor eine besonders gute Erfassung von Störungen in der Strömung ermöglicht, sodass insbesondere auch niedrige Strömungsgeschwindigkeiten erfasst werden können.

Um eine hohe Struktursteifigkeit ohne Schwächung der Struktur und eine verbesserte Spritzgießbarkeit des Strömungsmessers, insbesondere des Messrohrs, zu gewährleisten, ist die Innenwand des Messrohres durchgehend geschlossen ausgebildet und/oder der Detektor ist in der Wandung des Messrohres integriert oder außenseitig an dieser angeordnet. Dadurch bleiben Schwachstellen an Öffnungen, an denen sich Risse bilden können oder Fluid austreten könnte, aus. Ferner wird durch die Anordnung des Detektors außerhalb des Messraums die Strömung des Fluids nicht zusätzlich beeinträchtigt.

Vorteilhafterweise ist der der Detektor als mindestens ein Piezoelement ausgebildet und an einer Außenseite des Messrohrs angeordnet. In einer besonders vorteilhaften Weiterbildung sind zwei Piezoelemente auf gegenüberliegenden Seiten am Umfang des Messrohrs angeordnet. Durch die Nutzung von Piezoelementen ist ein kostengünstiges, zuverlässiges Mittel zur kontaktlosen Erfassung der Störungen in der Strömung und Bestimmung der Fließgeschwindigkeit bereitgestellt. Insbesondere eine Anordnung von jeweils einem Piezoelement auf gegenüberliegenden Seiten des Messrohrs mit gleichem Abstand zum Störkörper ermöglicht eine zuverlässige Erfassung von Turbulenzen oder Störungen in der Strömung. Insbesondere wenn die Turbulenzen oder Störungen in der Strömung entlang der Längsachse gesehen abwechselnd auf unterschiedlichen Seiten des Störkörpers auftreten, insbesondere in Form von Wirbeln.

Mit besonderem Vorteil erstreckt sich der Störkörper quer zu einer Längsachse des Messraumes beispielsweise in einer Hochachse durch diesen hindurch, wobei der wenigstens eine Vorsprung am Grundabschnitt des Einschubelements in einer mit Bezug auf die Hochachse um die Längsachse gedrehten Position an der Innenwand angeordnet ist. Die Verdrehung kann beispielsweise 60° bis 90°, bevorzugt 80° bis 90° und besonders bevorzugt 90° betragen, sodass der Vorsprung besonders bevorzugt unmittelbar quer zur Hochachse angeordnet ist und damit auch quer zur Anordnung der Bügel am Grundabschnitt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: in perspektivischer Ansicht ein Messrohr mit einem Einschubelement anhand eines ersten Ausführungsbeispiels;
- Fig. 2: das erfindungsgemäße Einschubelement in einer perspektivischen Einzelansicht;
- Fig. 3: eine Vorderansicht des Messrohrs gemäß dem ersten Ausführungsbeispiel mit eingesetztem Einschubelement;
- Fig. 4: eine quergeschnittene Seitenansicht des Messrohrs mit eingesetztem Einschubelement entlang der Schnittlinie A-A gemäß Fig. 3;
- Fig. 5: eine weitere quergeschnittene Seitenansicht des Messrohrs mit eingesetztem Einschubelement entlang der Schnittlinie B-B gemäß Fig. 3;
- Fig. 6: in perspektivischer Ansicht ein weiteres Ausführungsbeispiel des Einschubelements in Anordnung vor dem Messrohr mit einer Längsnut in einer Innenwand des Messrohrs;
- Fig. 7: das Messrohr gemäß dem weiteren Ausführungsbeispiel mit eingesetztem Einschubelement in einer Vorderansicht auf das Flanschende;
- Fig. 8: eine quergeschnittene Seitenansicht des Messrohrs mit eingesetztem Einschubelement entlang der Schnittlinie C-C gemäß Fig. 7 und
- Fig. 9: eine quergeschnittene Seitenansicht des Messrohrs mit eingesetztem Einschubelement entlang der Schnittlinie D-D des weiteren Ausführungsbeispiels gemäß Fig. 7;

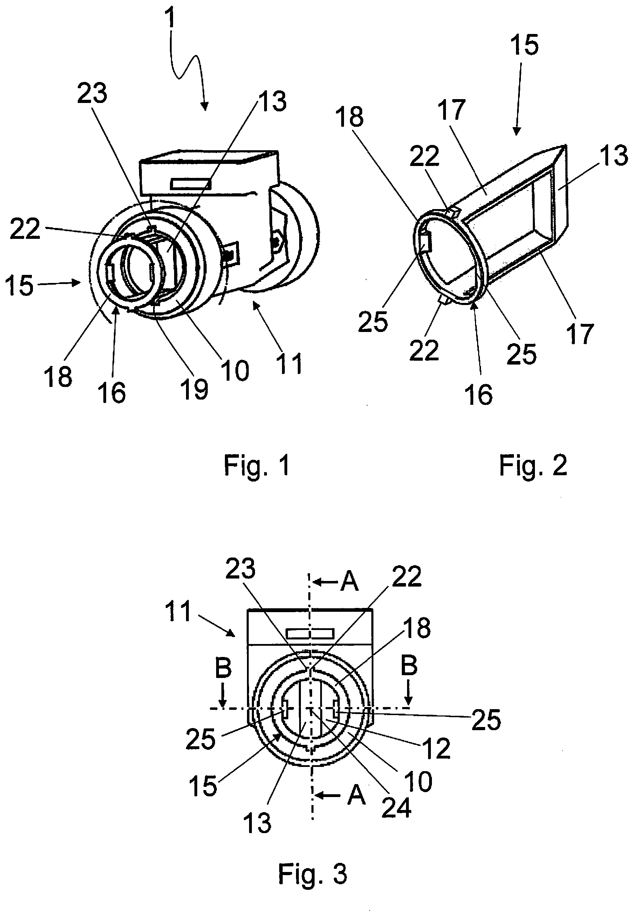

Fig. 1 zeigt in perspektivischer Darstellung einen Strömungsmesser 1 mit an einem Messrohr 11 ausgebildeten Flanschende 10. Ein Einschubelement 15 ist flanschendseitig teilweise in das Messrohr 11 eingeschoben. Das Einschubelement 15 umfasst einen als Ringkörper 18 ausgebildeten Grundabschnitt 16 mit zwei Anformungen 22 sowie einen Störkörper 13. Der Störkörper 13 befindet sich hier in dem Messrohr 11. Am Flanschende 10 angeordnet sind eine Ringnut 19 zur Aufnahme des Ringkörpers 18 sowie Aussparungen 23 zur Aufnahme der komplementären Anformungen 22.

In Fig. 2 dargestellt ist das Einschubelement 15 umfassend den als Ringkörper 18 ausgestalteten Grundabschnitt 16 mit daran ausgebildeten Bügeln 17 zwischen denen der Störkörper 13 ausgebildet ist. An dem Ringkörper 18 sind radial nach innen auf diametral gegenüberliegenden Seiten Vorsprünge 25 ausgebildet. Ferner die sind radial nach außen vorstehenden Anformungen 22 an dem Ringkörper 18 ausgebildet.

In Fig. 3 dargestellt ist das Messrohr 11 mit vollständig eingeschobenem Einschubelement 15 in einer Draufsicht auf das Flanschende 10. Dabei sitzt die Anformung 22 in der Aussparung 23 des Flanschendes 10. Die an den Ringkörper 18 angeordneten Vorsprünge 25 ragen in einen Messraum 12 hinein, in dem auch der Störkörper 13 angeordnet ist.

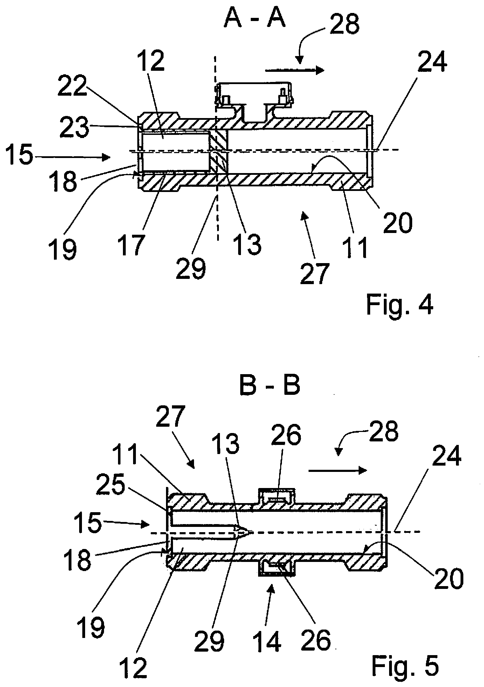

Fig. 4 und Fig. 5 zeigen in einer quergeschnittenen Seitenansicht entlang Schnittlinie A-A beziehungsweise B-B gemäß Fig. 3 das Messrohr 11 mit darin vollständig eingeschobenem Einschubelement 15 sowie zwei als Piezoelemente 26 ausgestaltete Detektoren 14, die auf eine Außenwand an einer Außenseite 27 des Messrohrs 11 beispielsweise aufgeklebt sind. Durch das Aufkleben wird eine störungsfreie Übertragung der Störungen im Fluidstrom in Form von Ultraschallwellen oder -impulsen zu dem Piezoelement 26 begünstigt, wobei auch beispielsweise eine Ölfüllung im Aufnahmevolumen der Piezoelemente 26 vorgesehen sein kann. Durch die Anformung 22 und die Aussparung 23 gemäß Fig. 3 und 4 wird eine Ausrichtung des Einschubelements 15 mit Störkörper 13 um eine rotatorische Längsachse 24 erreicht. Dabei sind um jeweils 90° versetzt, um die Längsachse 24 der Vorsprung 25 und der Störkörper 13 angeordnet. Da die vom Störkörper 13 erzeugten Turbulenzen bei dieser Anordnung nahe am Piezoelement 26 auftreten, sind die Turbulenzen besonders gut erfassbar und eine genaue Messung der Strömungsgeschwindigkeit des Fluids ist möglich. In dieser Ausgestaltung mit der Anformung 22 und der Aussparung 23 ist eine den Messraum 12 begrenzende Innenwand 20 durchgängig geschlossen und unterbrechungsfrei plan, wodurch eine hohe Stabilität des Messrohrs gegeben ist. Diese Eigenschaften sind insbesondere bei der Messung von Fluidströmen bei hohem Druck von 80 bar und mehr wichtig. Der Ringkörper 18 sitzt in eingeschobenem Zustand in der Ringnut 19 am Flanschende 10 des Messrohres 11, ein wodurch das Flanschende 10 und der Ringkörper 18 stirnseitig eine plane Ebene bilden. Der Bügel 17 liegt angrenzend an die Innenwand 20 des Messrohrs 11 an und ragt in den Messraum 12 hinein.

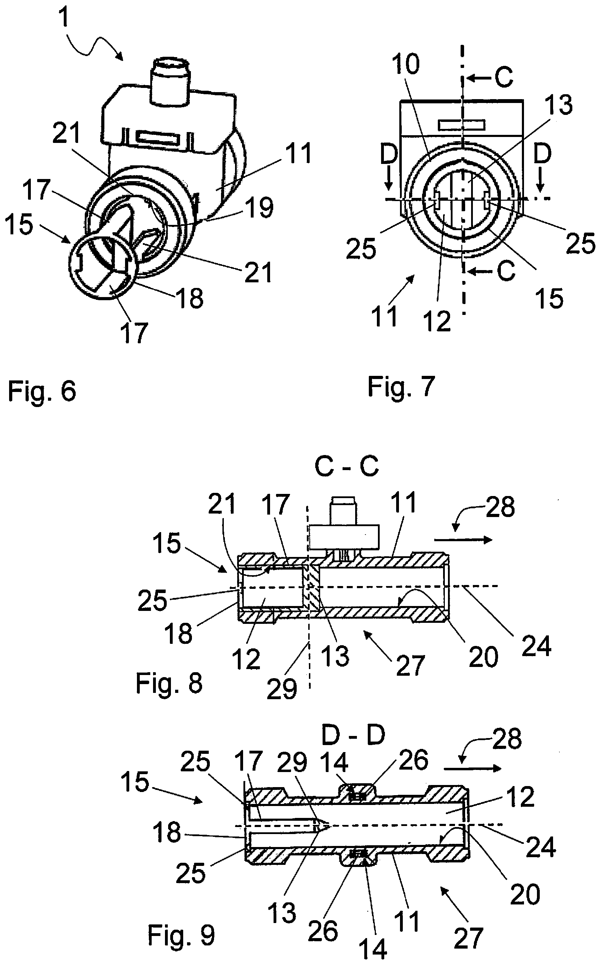

Fig. 6 zeigt den Strömungsmesser 1 in einem weiteren Ausführungsbeispiel mit in dem Messrohr 11 ausgebildete Längsnuten 21 zur Aufnahme der Bügel 17 des Einschubelements 15. Die Längsnuten 21 dienen zur Aufnahme und Führung der Bügel 17 beim Einschub in das Messrohr 11. Ebenfalls dargestellt ist die Ringnut 19 zur Aufnahme des Ringkörpers 18.

Fig. 7 zeigt das Messrohr 11 mit vollständig eingeschobenem Einschubelement 15. Dabei ragt der Vorsprung 25 in den Messraum 12 hinein und der Störkörper 13 ist im Messraum 12 angeordnet. Eine Hochachse 29 gemäß Fig. 8 und 9 verläuft parallel zur Schnittlinie C-C.

Fig. 8 und Fig. 9 zeigen einen Abschnitt des Messrohrs 11 gemäß Fig. 7 entlang der Schnittlinien C-C beziehungsweise D-D mit vollständig eingeschobenem Einschubelement 15 im Messrohr 11. Der Bügel 17 liegt dabei bündig in der Längsnut 21 ein. Durch diesen bündigen Formschluss werden Vibrationen des Bügels 17 oder des Störkörpers 13 bei einer Durchströmung mit Fluid vermieden. Durch die Längsnut 19 schließen die Innenwand 20 des Messrohrs 11 und eine Innenfläche des Bügels 17 bündig miteinander ab und bilden den Messraum 12. Auf der Außenseite 27 des Messrohres 11 sind diametral gegenüberliegend zwei Detektoren 14 in Form von Piezoelementen 26 angeordnet, wobei ein Öl/Leitfett oder ein anderer geeigneter Werkstoff, zum Beispiel Klebstoff, zwischen dem Messrohr 11 und den Piezoelementen 26 aufgebracht ist, um eine Übertragung von Ultraschallwellen in und aus dem Fluid auf die Piezoelemente 26 verbessert zu gewährleisten. Die Piezoelemente 26 sind über eine Steckverbindung oder Lötverbindung mit Signalkabeln verbunden, über die ein Messignal von den Piezoelementen zur Auswertung und Bestimmung der Fließgeschwindigkeit des Fluids an eine Auswertungseinheit weitergeleitet wird.

Die Durchströmung des Messraumes 12 erfolgt in einer mit einem Pfeil angedeuteten Strömungsrichtung 28, und stromabwärts des Störkörpers 13 befinden sich zwei Piezoelemente 26. Durch die Anströmung des Störkörpers 13 werden an diesem periodische Störungen in Form von Turbulenzen oder sich ablösenden Wirbeln gebildet. Dabei entstehen Schallwellen. Stromaufwärts vor dem Störkörper 13 befinden sich an der Innenwand 20 des Messraumes 12 in seitlicher Anordnung zum Störkörper 13 zwei Vorsprünge 25. Die Vorsprünge 25 sind in sich gegenüberliegender Anordnung an dem Ringkörper 18 angeformt, wobei die diametrale Richtung der Anordnung der Vorsprünge 25 gemäß dem gezeigten Ausführungsbeispiel 90° gedreht ist zur Hochachse 29, entlang der sich der Störkörper 13 erstreckt. Die sich diametral gegenüberliegenden Piezolemente 26 sind 90° gedreht zur Hochachse 29 an der Außenseite 27 des Messrohrs 11 angeordnet.

Erfolgt eine Durchströmung des Messraumes 11, so werden an oder unmittelbar hinter den Vorsprüngen 25 Turbulenzen gebildet, die die Turbulenzen am Störkörper 13 beeinflussen und/oder die sich mit Wirbeln am Strömungskörper 13 beispielsweise vereinen können und diese damit vergrößern. Dadurch ergibt sich eine Verstärkung der Turbulenzen am Störkörper 12, wodurch auch die Schallwellen verstärkt werden. Dadurch sind auch Strömungen bei sehr niedrigen Strömungsgeschwindigkeiten des Fluids durch das Messrohr 11 hindurch von den Piezoelementen 26 verbessert messbar.

### Bezugszeichenliste:

- 1: Strömungsmesser

- 10: Flanschende
- 11: Messrohr
- 12: Messraum
- 13: Störkörper
- 14: Detektor
- 15: Einschubelement
- 16: Grundabschnitt
- 17: Bügel
- 18: Ringkörper
- 19: Ringnut
- 20: Innenwand
- 21: Längsnut
- 22: Anformung
- 23: Aussparung
- 24: Längsachse
- 25: Vorsprung
- 26: Piezoelement
- 27: Außenseite
- 28: Strömungsrichtung
- 29: Hochachse

## Patentansprüche

1. Strömungsmesser (1) zur Messung der Fließgeschwindigkeit eines Fluids, mit einem mit wenigstens einem Flanschende (10) axial begrenzten Messrohr (11), das einen mit dem Fluid durchströmbaren Messraum (12) bildet und mit wenigstens einem Störkörper (13) zur Erzeugung von Störungen in der Strömung, wobei der Störkörper (13) im Messraum (12) angeordnet ist und wobei stromabwärts des Störkörpers (13) weiterhin ein Detektor (14) zur Erfassung der Störungen angeordnet ist, und wobei ein in das Messrohr (11) eingeführtes Einschubelement (15) mit einem Grundabschnitt (16) vorgesehen ist, wobei der Grundabschnitt (16) im Flanschende (10) angeordnet ist und wobei das Einschubelement (15) sich an den Grundabschnitt (16) anschließende Bügel (17) aufweist, die in den Messraum (12) hineinragen,
wobei zwischen den Bügeln (17) der Störkörper (13) ausgebildet und in seiner Position im Messraum (12) gehalten ist,
**dadurch gekennzeichnet,**
**dass**
der Grundabschnitt (16), die Bügel (17) und der Störkörper (13) gemeinsam als ein einteiliges Bauteil ausgebildet sind.

2. Strömungsmesser (1) nach Anspruch 1,
**dadurch gekennzeichnet,**
**dass** der Grundabschnitt (16) des Einschubelementes (15) einen Ringkörper (18) bildet, der in einer in das Flanschende (10) eingebrachten Ringnut (19) angeordnet ist.

3. Strömungsmesser (1) nach einem der vorgenannten Ansprüche, **dadurch gekennzeichnet,**
**dass** eine Innenwand (20) des Messrohrs (11) wenigstens eine und/oder zwei gegenüberliegende Längsnuten (21) aufweist, in denen die Bügel (17) einliegen, wenn das Einschubelement (15) in das Messrohr (11) eingeführt ist.

4. Strömungsmesser (1) nach Anspruch 3,
**dadurch gekennzeichnet,**
**dass** die Längsnuten (21) komplementär zum Querschnitt der Bügel (17) ausgebildet sind, sodass die Innenwand (20) mit in die Längsnuten (21) eingebrachten Bügeln (17) unterbrechungsfrei ausgebildet ist.

5. Strömungsmesser (1) nach einem der vorgenannten Ansprüche,
**dadurch gekennzeichnet,**
**dass** der Grundabschnitt (16) mit wenigstens einer Anformung (22) ausgebildet ist und dass das Flanschende (10) des Messrohrs (11) mit einer zur Anformung (22) komplementären Aussparung (23) ausgebildet ist, sodass das Einschubelement (15) um eine Längsachse (24) des Messrohres (11) rotatorisch ausgerichtet ist, wenn die Anformung (22) in die Aussparung (23) eingreift.

6. Strömungsmesser (1) nach einem der vorgenannten Ansprüche,
**dadurch gekennzeichnet,**
**dass** die Innenwand (20) des Messrohres (11) durchgehend geschlossen ausgebildet ist und/oder dass der Detektor (14) in der Wandung des Messrohres (11) integriert ist oder außenseitig an dieser angeordnet ist.

7. Strömungsmesser (1) nach einem der vorgenannten Ansprüche,
**dadurch gekennzeichnet,**
**dass** am Grundabschnitt (16) des Einschubelementes (15) stromaufwärts des Störkörpers (13) wenigstens ein radial nach innen ragender Vorsprung (25) ausgebildet ist.

8. Strömungsmesser (1) nach Anspruch 7,
**dadurch gekennzeichnet,**
**dass** an sich diametral gegenüberliegenden Positionen des Grundabschnittes (16) zwei Vorsprünge (25) angeordnet sind.

9. Strömungsmesser (1) nach einem der vorgenannten Ansprüche,
**dadurch gekennzeichnet,**
**dass** das Einschubelement (15) ein Spritzgussbauteil aus einem Kunststoff oder ein Druckgussbauteil aus einem metallischen Werkstoff ist.

10. Strömungsmesser (1) nach einem der vorgenannten Ansprüche,
**dadurch gekennzeichnet,**
**dass** der Detektor (14) als mindestens ein Piezoelement (26) ausgebildet ist und an einer Außenseite (27) des Messrohrs (11) angeordnet ist.

11. Strömungsmesser (1) nach Anspruch 10,
**dadurch gekennzeichnet,**
**dass** zwei Piezoelemente (26) auf gegenüberliegenden Seiten am Umfang des Messrohrs (11) angeordnet sind.

## Claims

1. A flow meter (1) for measuring the flow velocity of a fluid having a measurement tube (11) that is axially bounded by at least one flange end (10) and that forms a measurement space (12) that can be flowed through by the fluid and having at least one baffle (13) to generate interference in the flow, wherein the baffle (13) is arranged in the measurement space (12) and wherein a detector (14) for detecting the interference is furthermore arranged downstream of the baffle (13), wherein an insertion element (15) introduced into the measurement tube (11) and having a base portion (16) is provided, wherein the base portion (16) is arranged in the flange end (10), and wherein the insertion element (15) has brackets (17) that adjoin base portion (16) and that project into the measurement space (12), wherein the baffle (13) is formed and is held in its position in the measurement space (12) between the brackets (17),
**characterized in that**
the base portion (16), the brackets (17), and the baffle (13) are configured together as a single component.

2. A flow meter (1) in accordance with claim 1,
**characterized in that**
the base portion (16) of the insertion element (15) forms an annular member (18) that is arranged in an annular groove (19) introduced into the flange end (10).

3. A flow meter (1) in accordance with one of the preceding claims,
**characterized in that**
an inner wall (20) of the measurement tube (11) has at least one and/or two oppositely disposed longitudinal groove(s) (21) in which the brackets (17) lie when the insertion element (15) is introduced into the measurement tube (11).

4. A flow meter (1) in accordance with claim 3,
**characterized in that**
the longitudinal grooves (21) are formed as complementary to the cross-section of the brackets (17) so that the inner wall (20) is formed without interruption with brackets (17) introduced into the longitudinal grooves (21).

5. A flow meter (1) in accordance with one of the preceding claims,
**characterized in that**
the base portion (16) is formed with at least one molding (22); and **in that** the flange end (10) of the measurement tube (11) is formed with a cutout (23) complementary to the molding (22) so that the insertion element (15) is rotationally oriented about a longitudinal axis (24) of the measurement tube (11) when the molding (22) engages into the cutout (23).

6. A flow meter (1) in accordance with one of the preceding claims,
**characterized in that**
the inner wall (20) of the measurement tube (11) is continuously closed; and/or **in that** the detector (14) is integrated in the wall of the measurement tube (11) or is arranged at the outside thereat.

7. A flow meter (1) in accordance with one of the preceding claims,
**characterized in that**
at least one radially inwardly protruding projection (25) is formed downstream of the baffle (13) at the base portion (16) of the insertion element (15).

8. A flow meter (1) in accordance with claim 7,
**characterized in that**
two projections (25) are arranged at diametrically opposed positions of the base portion (16).

9. A flow meter (1) in accordance with one of the preceding claims,
**characterized in that**
the insertion element (15) is an injection molded component composed of a plastic or a die cast component composed of a metallic material.

10. A flow meter (1) in accordance with one of the preceding claims,
**characterized in that**
the detector (14) is configured as at least one piezo element (26) and is arranged at an outer side (27) of the measurement tube (11).

11. A flow meter (1) in accordance with claim 10,
**characterized in that**
two piezo elements (26) are arranged at oppositely disposed sides at the periphery of the measurement tube (11).

## Revendications

1. Débitmètre (1) destiné à mesurer la vitesse d'écoulement d'un fluide, comprenant un tube de mesurage (11), limité axialement au moyen d'au moins une extrémité formant bride (10), qui forme un espace de mesure (12) pouvant être traversé par le fluide et comprenant au moins un obstacle (13) pour générer des perturbations dans l'écoulement, l'obstacle (13) étant disposé dans l'espace de mesure (12) et un détecteur (14) pour détecter les perturbations étant en outre disposé en aval de l'obstacle (13), un élément enfichable (15) introduit dans le tube de mesurage (11) étant pourvu d'une partie de base (16), la partie de base (16) étant disposée dans l'extrémité formant bride (10) et l'élément enfichable (15) comportant des branches (17) contiguës à la partie de base (16), qui font saillie dans l'espace de mesure (12), l'obstacle (13) étant réalisé, et sa position maintenue dans l'espace de mesure (12), entre les branches (17),
**caractérisé en ce que**
la partie de base (16), les branches (17) et l'obstacle (13) sont réalisés ensemble sous la forme d'un élément en une seule pièce.

2. Débitmètre (1) selon la revendication 1,
**caractérisé en ce que**
la partie de base (16) de l'élément enfichable (15) forme un corps annulaire (18), qui est disposé dans une rainure annulaire (19) ménagée dans l'extrémité formant bride (10).

3. Débitmètre (10) selon l'une des revendications précédentes,
**caractérisé en ce que**
une paroi intérieure (20) du tube de mesurage (11) comporte au moins une et/ou deux rainures longitudinales (21) opposées, dans lesquelles se trouvent les branches (17) quand l'élément enfichable (15) est introduit dans le tube de mesurage (11).

4. Débitmètre (1) selon la revendication 3,
**caractérisé en ce que**
les rainures longitudinales (21) sont réalisées de manière complémentaire de la coupe transversale des branches (17), de telle sorte que la paroi intérieure (20) est réalisée sans interruption lorsque les branches (17) sont introduites dans les rainures longitudinales (21).

5. Débitmètre (1) selon l'une des revendications précédentes,
**caractérisé en ce que**
la partie de base (16) est réalisée avec au moins un appendice (22) et **en ce que** l'extrémité formant bride (10) du tube de mesurage (11) est réalisée avec un évidement (23) complémentaire de l'appendice (22), de telle sorte que l'élément enfichable (15) est orienté de manière rotative sur un axe longitudinal (24) du tube de mesurage (11) quand l'appendice (22) est en prise dans l'évidement (23).

6. Débitmètre (1) selon l'une des revendications précédentes,
**caractérisé en ce que**
la paroi intérieure (20) du tube de mesurage (11) est réalisée de manière fermée sans interruption et/ou **en ce que** le détecteur (14) est intégré dans la paroi du tube de mesurage (11) ou est disposé sur celle-ci côté extérieur.

7. Débitmètre (1) selon l'une des revendications précédentes,
**caractérisé en ce que**
au moins une saillie (25) dépassant radialement vers l'intérieur est réalisée sur la partie de base (16) de l'élément enfichable (15) en amont de l'obstacle (13).

8. Débitmètre (1) selon la revendication 7,
**caractérisé en ce que**
deux saillies (25) sont disposées en des points diamétralement opposés de la partie de base (16).

9. Débitmètre (1) selon l'une des revendications précédentes,
**caractérisé en ce que**
l'élément enfichable (15) est un élément moulé par injection en matière plastique ou un élément coulé sous pression en matière métallique.

10. Débitmètre (1) selon l'une des revendications précédentes,
**caractérisé en ce que**
le détecteur (14) est réalisé sous la forme d'au moins un élément piézoélectrique (26) et est disposé sur un côté extérieur (27) du tube de mesurage (11).

11. Débitmètre (1) selon la revendication 10,
**caractérisé en ce que**
deux éléments piézoélectriques (26) sont disposés sur la circonférence du tube de mesurage (11) sur des côtés opposés.
